# EUROPEAN PATENT SPECIFICATION

(11) **EP 4 166 805 B1**
(45) Date of publication and mention of the grant of the patent: **04.12.2024**
(21) Application number: 21202544.9
(22) Date of filing: 13.10.2021
(51) Int. Cl.: F16D 3/74

(54) **COMPENSATING COUPLING**
AUSGLEICHSKUPPLUNG
ACCOUPLEMENT DE COMPENSATION

(43) Date of publication of application: 19.04.2023
(73) Proprietor: Geislinger Group GmbH, 5300 Hallwang (AT)
(72) Inventor: GEISLINGER, Matthias, 5300 Hallwang (AT); SIGLE, Dr.-Ing., Christof, 5300 Hallwang (AT)
(74) Representative: Beck & Rössig European Patent Attorneys

(56) References cited:
- DE-U1- 202014 000 648
- JP-U- S4 950 640
- JP-U- S5 935 871
- US-A1- 2005 085 303

## Description

The present invention relates to a compensating coupling for connecting two rotating elements in a drive train, comprising the features of the preamble portion of claim 1.

Couplings for connecting two rotating elements in a drive train, comprising a main coupling device configured to be connected to each of said rotating elements and including at least one membrane made of fibre-reinforced plastic for transmitting torque and for compensating axial and/or radial and/or angular displacement between said rotating elements, are known e.g., from EP 0 856 674 B1 and EP 2 990 676 B1. Compensating couplings allow for compensation of axial, radial and/or axial displacements between the axes of rotation of rotating elements of a drive train through at least one membrane. The membrane is usually arranged in a plane substantially perpendicular to the axis of rotation and on the one hand sufficiently stiff for transmitting torque but on the other hand flexible enough to deform elastically thereby providing the desired compensating effect. The membrane may have a corrugated or wavy structure for enhancing the intended deformation.

Typical applications of such compensating couplings include drive trains of ships and the like requiring transmission of high torque while attenuating transmission of vibrations. Compensation couplings may for example be arranged in a drive shaft of a maritime application between an engine and a gearbox. Such applications are characterised by rugged environment. In the event of failure of the main coupling device, manoeuvrability of a vessel may be impaired since the gear box could be cut off from the engine.

A compensating coupling for connecting two rotating elements in a drive train, comprising the features of the preamble portion of claim 1 is known from DE 10 2014 000 648 U1. Further couplings are known from JPS 5935871 U and JPS 4950640 U.

The object of the present invention is to provide an alternative compensating compling that allays safety concerns about the ability to transmit torque especially in respect of the membrane.

Accordingly, the present invention provides a compensating coupling for connecting two rotating elements in a drive train, comprising the features of claim 1.

The auxiliary coupling device adds a take-me-home function to a compensating coupling having a membrane of fibre-reinforced plastic.

In the first position, the protrusions are spaced apart from the openings e.g. by a gap in circumferential direction. The gap is dimensioned to avoid contact as long as the main coupling device remains working for torque transmission, and to enable engagement upon failure or breakage of the main coupling device.

In the event of failure of the membrane or any other portion of the main coupling device, the auxiliary coupling device is able to provide torque transmission, which for a maritime application means maintaining manoeuvrability. Under normal operation, however, the auxiliary coupling device is disengaged so that the main coupling device can show its full potential of compensating displacements and torque will be transmitted solely via the main coupling device.

Advantageous embodiments are indicated in further claims.

In one preferred embodiment, the first and second auxiliary coupling members include sleeve portions, which together radially encapsulate the main coupling device. This will in addition protect the main coupling device against damage from outside, for example during maintenance work in an area around the coupling.

In a further preferred embodiment, a fire-resistant fibre-reinforced layer is laminated on the outer circumference of the first and second auxiliary members to further protect the main coupling device against damage, in particular fire, to thereby increase reliability of the compensating coupling.

In another preferred embodiment, the sleeve portions are made of fibre-reinforced plastic to thereby keep the weight of the rotating parts low. This is also beneficial for implementation of a fire-resistant fibre-reinforced layer as an outer layer.

Furthermore, each of the first and second auxiliary coupling members may comprise two or more segments forming said sleeve portions, the segments being detachably connected with each other in circumferential direction of the main coupling device. This simplifies assembly and disassembly of the auxiliary coupling device. The auxiliary coupling may thus be fitted on a main coupling device which has already been mounted in a drive train. Considering the size of compensation couplings, space considerations may require a segmented auxiliary coupling device. A segmented auxiliary coupling device may also be passed through narrow openings more easily. The sleeve portion of either of the first or second axillary coupling members may be segmented in two three, four or even more parts.

In a further preferred embodiment, the segments have axial flanges extending radially from the sleeve portion, neighbouring segments contacting each other and being connected with each other at their axial flanges. The axial flanges not only simplify connection of the segments for forming the sleeves but also define ribs in lengthwise direction of the coupling, parallel to the axis of rotation, increasing the rigidity of the respective first and second auxiliary coupling members.

According to yet another preferred embodiment the projections may be formed by cylindrical bolts secured to the first auxiliary coupling member. Such bolts can be easily mounted on a first auxiliary coupling member even when made of fibre-reinforced plastic.

In particular, the first auxiliary coupling member may have a radial flange portion at an axial end of its sleeve portion while the projections protrude axially from said radial flange portion.

Preferably, the openings are formed by holes on a radial flange portion at an axial end of the sleeve portion of the second auxiliary coupling member. Such holes can be provided easily in a second auxiliary coupling member when made of fibre-reinforced plastic.

The bolts are preferably made of steel and are thus built to last under high-torque.

In a further preferred embodiment, each bolt has a rubber sleeve for contacting the rim of the corresponding hole in the second position. The rubber sleeve may reduce the impact on the rim of the hole and also attenuate the transmission of vibrations when the compensating coupling is operated via the auxiliary coupling device.

Additionally, the rim of each hole may be reinforced by a metal ring, respectively, which is embedded in the fibre-reinforced plastic material of the flange portion of the second axillary coupling member.

In a further preferred embodiment, the arrangement of bolts and holes may be replaced by a formation of toothed edges on the first and second auxiliary coupling members to form the projections and openings of the auxiliary coupling device.

In a further preferred embodiment, connection holes on the main coupling device and on the auxiliary coupling device for connecting same to one of the flanges of the drive train are aligned with each other. It is thus possible to mount the main coupling device and the auxiliary coupling device with the same connectors on the corresponding rotating element, e.g., flange of the drive train. Accordingly, the structure of the rotating element of the drive train remains simple and does not require any separate means for mounting the auxiliary coupling device.

It is, however, also possible to provide individual means for connecting the main coupling device and the axillary coupling device separately on a rotating element of a drive train. In other words, in another embodiment, the main coupling device and the auxiliary coupling device are separately secured to the rotating elements by individual connection means, so that the auxiliary coupling device can be mounted later than the main coupling device or be removed independently.

The invention will be described in greater detail hereinafter with reference to the accompanying drawings in which:
- Figure 1: is a cross-section along an axis of rotation of a compensating coupling according to an embodiment of the present invention,
- Figure 2: is a three-dimensional view of the auxiliary coupling device of the compensating coupling according to Fig. 1,
- Figure 3: a cross-sectional view of a projection of the auxiliary coupling device in a first, disengaged position relative to the corresponding opening,
- Figure 4: a cross-sectional view of a projection of the auxiliary coupling device in a second, engaged position relative to the corresponding opening, and in
- Figure 5: an alternative arrangement for projections and openings of the auxiliary coupling device.

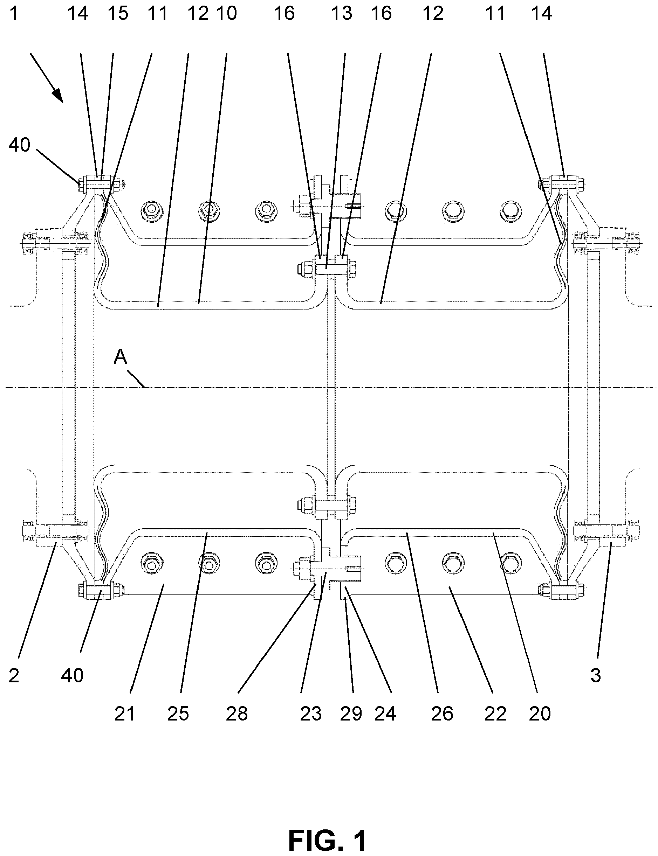

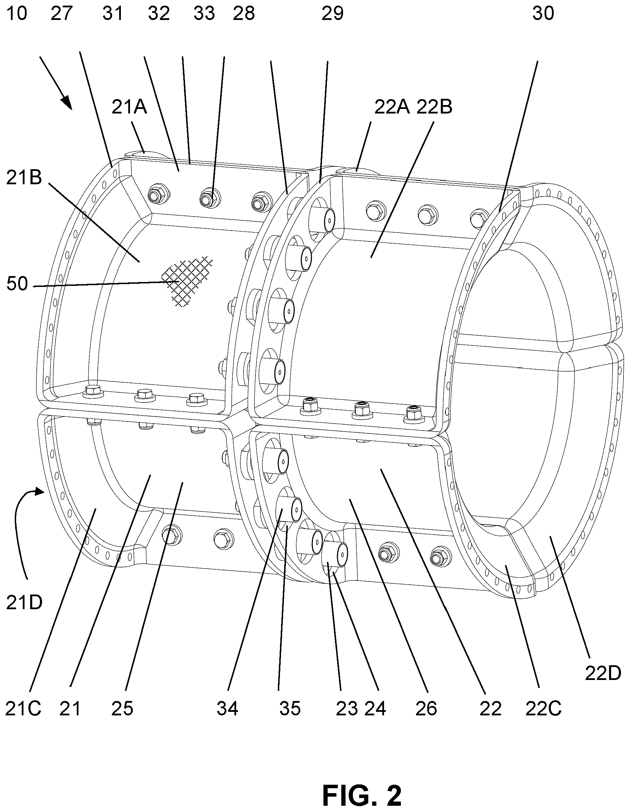

Figs. 1 and 2 show a compensating coupling 1 for connecting two rotating elements 2 and 3 of a drive train. The compensating coupling 1 is arranged between said rotating elements 2 and 3 and configured to connect to a first rotating element 2, e.g. a flange or shaft, and to a second rotating element 3, e.g. a flange or shaft, of the drive train. One of the rotating elements 2 may be coupled to an engine while the other of said rotating elements 3 may be coupled to a gear box.

The compensating coupling 1 comprises a main coupling device 10 and an auxiliary coupling device 20. The main coupling device 10 is intended to transmit torque under normal operation conditions whereas the auxiliary coupling device 20 is disengaged as long as the main coupling device 10 remains to be working. Under normal operation conditions the auxiliary coupling device 20 does not transmit torque. The auxiliary coupling device 20 provides an emergency function in the event the main coupling device 10 fails, i.e. is no longer able to sufficiently transmit torque. In this case the auxiliary coupling device 20 engages to bypass the main coupling device 10 and thereby maintain torque transmission of the drive train.

The main coupling device 10 of the embodiment in Fig. 1 includes at least one membrane 11 made of fibre-reinforced plastic for transmitting torque and for compensating axial and/or radial and/or angular displacement between said rotating elements 2 and 3 of the drive train. Thus at least one membrane 11 is arranged in a plane substantially perpendicular to the axis A of rotation of the drive train and sufficiently stiff for transmitting torque but flexible enough to deform elastically and thereby provide the desired compensating effect. The membrane 11 may have a corrugated or wavy structure for enhancing the intended deformation. If the membrane 11 fails, torque transmission via the main coupling device may be disrupted.

In the embodiment shown in Fig. 1 the main coupling device 10 includes two membranes 11 at axial end portions of two axial tubes 12 which in turn are connected at their ends opposite to the membranes 11 with each other by bolts 13. Each of the membranes 11 is surrounded radially by an annular connecting portion 14 having openings 15 for securing the main coupling device 10 to the respective rotating element 2 and 3. The ends opposite to the membranes 11 are bent radially outwardly to define flanges 16 for the bolts 13.

One membrane 11, one axial tube 12, one annular connecting portion 14 and one flange 16 may be integrally formed from fibre-reinforced plastic material. Two of such structures are connected by the bolts 13.

It is however to be emphasised, that the structure of the main coupling device 10 as shown in Fig. 1 is of exemplary nature only and may be replaced by any other type of coupling having at least one membrane 11 for compensating axial, radial and/or angular displacements. For example, the main coupling device 10 maybe one as shown in EP 0 856 674 B1 or EP 2 990 676 B1, though the invention is not limited to any of these main coupling devices 10 either.

The auxiliary coupling device 20 includes a first auxiliary coupling member 21 configured to be connected to one of said rotating elements 2 and a second auxiliary coupling member 22 configured to be coupled to the other of said two rotating elements 3 of the drive train.

The first auxiliary coupling member 21 and the second auxiliary coupling member 22 are arranged around the radial outer circumference of the main coupling device 10. In order to protect the main coupling device 10 against damage from outside, the first auxiliary coupling member 21 and the second auxiliary coupling member 22 may radially encapsulate the main coupling device.

Further, the first auxiliary coupling member 21 has projections 23 extending axially into openings 24 provided on the second auxiliary coupling member 22. The projections 23 and openings 24 are arranged in a way that in a first position the projections 23 and openings 24 are disengaged, i.e., do not contact each other, thereby disabling torque transmission via the auxiliary coupling device 20. In a second position however, which is obtained through rotation of the first and second auxiliary coupling members 21, 22 relative to each other e.g. in the event of breakage or failure of the main coupling device 10, the projections 23 and the openings 24 engage in circumferential direction for enabling torque transmission via the auxiliary coupling device 20.

Each of the first auxiliary coupling member 21 and the second auxiliary coupling member 22 includes a tubular sleeve portion 25, 26 extending around a portion of the main coupling device 10 and terminating at both axial ends in radial flange portions 27, 28, 29 and 30 that are bent radially outwardly from the tubular sleeve porti24ns 25, 26. Preferably, the first and second auxiliary coupling members 21 and 22, in particular their tubular sleeve portions 25, 26 as well as their radial flange portions 27 to 30 are made of fibre-reinforced plastic.

Further, each of the first and second auxiliary coupling members 21 and 22 may be subdivided in two or more segments 21A, 21B, 21C, 21D, 22A, 22B, 22C, 22D that together form the sleeve portions 25, 26, respectively and may as well include the radial flange portions 27 to 30. The segments 21A, 21B, 21C, 21D, 22A, 22B, 22C, 22D of each of the first and second auxiliary coupling members 21 and 22 are detachably connected with each other in circumferential direction of the main coupling device 10. It is therefore possible to mount the auxiliary coupling device 20 on a main coupling device 10 that is already connected to the first and second rotating elements 2 and 3.

The segments 21A, 21B, 21C, 21D, 22A, 22B, 22C, 22D may be provided with axial flanges 31 extending radially from the sleeve portions 25, 26. Neighbouring segments 21A, 21B, 21C, 21D, 22A, 22B, 22C, 22D contact each other and are connected with each other at their axial flanges 31.

Pairs of axial flanges 31, which may be connected by bolts 33, define outer ribs 32 extending in lengthwise direction of the auxiliary coupling device 20 in parallel to the axis of rotation A of the compensating coupling 1 to thereby reinforce the structure of the respective first and second auxiliary coupling members 21 and 22.

Together with the radial flange portions 27 to 30, the axial flanges 31 define pockets at the outer circumference of the sleeve portions 25 and 26.

The radial flange portions 27 and 30 at the opposite axial ends of the auxiliary coupling device 20 are secured to the respective rotating elements 2 and 3 of the drivetrain, e.g. by sandwiching the annular portions 14 of the main coupling device 10 in between. Corresponding connection holes on the main coupling device 10 and the auxiliary coupling device 20 for connecting same to one of the rotating elements 2, 3 of the drive train may be aligned with each other so that they can be mounted together via the same connectors 40. It is, however, also possible, to connect the radial flange portions 27 and 30 of the auxiliary coupling device 20 separately from the main coupling device 10 to the rotating elements 2 and 3.

The inner radial flange portions 28 and 29 of the first and second auxiliary coupling members 21 and 22 do not contact each other but in fact are axially spaced apart from each other.

In the embodiment shown in Fig. 1 and 2, these inner radial flange portions 28 and 29 are provided with the said projections 23 and openings 24.

The projections 23 may be formed by bolts, preferably cylindrical bolts 34 that are secured to the first auxiliary coupling member 21, in particular its inner radial flange portion 28 and arranged in a way to protrude axially towards the second auxiliary coupling member 22.

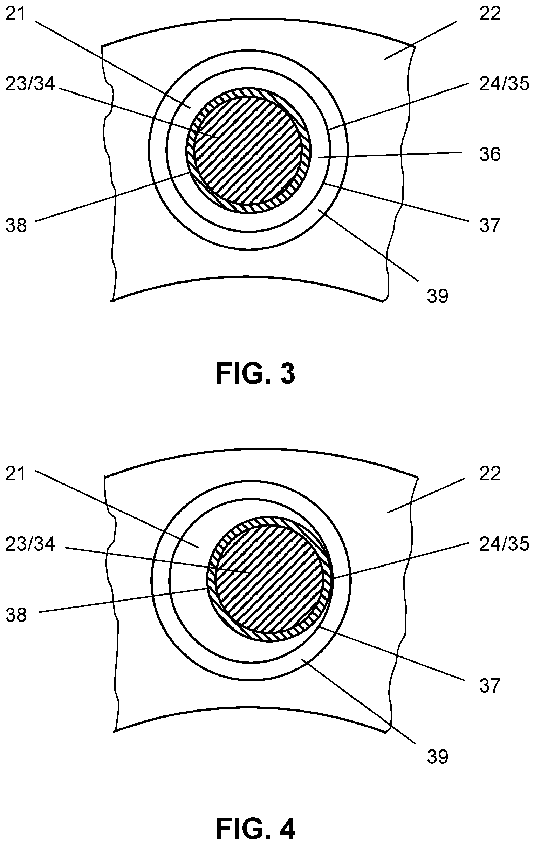

The openings 24 may be formed by holes 35 on the inner radial flange portion 29 of the second auxiliary coupling member 22. Each of the holes 35 receives one of the bolts 34. However, since the diameter of the bolts 34 is smaller than that of the holes 35, a radial gap 36 remains between the outer circumference of the bolt 34 and the inner rim 37 of the corresponding hole 35 in the first position, as already mentioned above. In other words, in the first position the bolts 34 do not contact the rims 37 of the holes 35 or any further portion of the second auxiliary coupling member 22, so that no torque will be transmitted in this disengaged state of the auxiliary coupling device 20 which is shown in Fig. 3. In the event of failure of the main coupling device 10, the first and second auxiliary coupling members 21 and 22 may rotate relative to each other so that the bolts 34 will contact the rims 37 of the holes 35 to thereby transmit torque and thus bypass the main coupling device 10 as shown in Fig. 4.

The bolts 34 may be made of steel and optionally may further include an outer rubber sleeve 38 to reduce impact forces on the rim 37 and attenuate vibrations in the bypass mode of the compensating coupling 1.

Further each of the holes 35 may be reinforced by a metal ring 39 defining the corresponding rim 37 and preferably embedded in the fibre-reinforced plastic material of the corresponding radial flange 28.

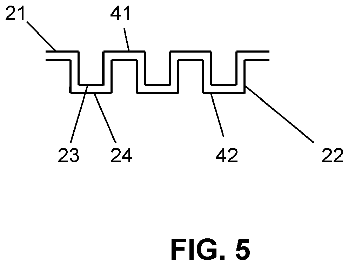

In an alternative embodiment, the bolts 34 and openings 35 are replaced by an alternative engagement structure for defining the projections 23 and openings 24 of the auxiliary coupling device 20. As shown in Fig. 5, projections 23 and openings 24 may as well be formed e.g. by toothed edges 41 and 42 on the first and second auxiliary coupling members 21 and 22. In the first position, again, the teeth of these edges 41 and 42 are spaced apart from each other, i.e. are disengaged for avoiding the transmission of any torque via the auxiliary coupling device 20, whereas in the second position the teeth engage in circumferential direction to thereby transmit torque and bypass the main coupling device 10.

Finally, a fire-resistant fibre-reinforced layer 50 may be laminated on the outer circumference of the first and second auxiliary members 21, 22 to further protect the main coupling device 10 against damage, in particular fire, to thereby increase reliability of the compensating coupling 1. The fire-resistant fibre-reinforced layer may be included as outer layer in a multi-layered fibre-reinforced structure of the first and second auxiliary coupling members 21 and 22.

The invention has been described in detail on the basis of certain embodiment and modifications. It is, however, not limited to this embodiment and its modifications but rather encompasses all embodiments as defined by the claims.

## Claims

1. Compensating coupling (1) for connecting to two rotating elements (2, 3) of a drive train, comprising:
a main coupling device (10) configured to be connected to each of said rotating elements (2, 3) and including at least one membrane (11) for transmitting torque and for compensating axial and/or radial and/or angular displacement between said rotating elements (2, 3), and
an auxiliary coupling device (20) having a first auxiliary coupling member (21) configured to be connected to one of said two rotating elements (2) and a second auxiliary coupling member (22) configured to be coupled to the other of said two rotating elements (3),
wherein the first auxiliary coupling member (21) has projections (23) extending axially into openings (24) provided on the second auxiliary coupling member (22) such that in a first position the projections (23) and openings (24) are disengaged thereby disabling torque transmission via the auxiliary coupling device (20), and in a second position,
obtainable through rotation of the first and second auxiliary coupling members (21, 22) relative to each other, the projections (23) and openings (24) engage in circumferential direction for enabling torque transmission via the auxiliary coupling device (20),
**characterized in that**
said at least one membrane (11) is made of fibre reinforced plastic,
the first auxiliary coupling member (21) and the second auxiliary coupling member (22) are respectively arranged around the outer radial circumference of the main coupling device (10).

2. Compensating coupling (1) according to claim 1, **characterised in that** the first and second auxiliary coupling members (21, 22) include sleeve portions (25, 26) together radially encapsulating the main coupling device (10).

3. Compensating coupling (1) according to claim 1 or 2, **characterised in that** a fire-resistant fibre-reinforced layer (50) is laminated on the outer circumference of the first and second auxiliary members (21, 22).

4. Compensating coupling (1) according to claim 2 or 3, **characterised in that** the sleeve portions (25, 26) are made of fibre-reinforced plastic

5. Compensating coupling (1) according to one of claims 2 to 4, wherein each of the first and second auxiliary coupling members (21, 22) comprises two or more segments (21A, 21B, 21C, 21D, 22A, 22B, 22C, 22D), forming said sleeve portions (25, 26), which are detachably connected with each other in circumferential direction of the main coupling device (10).

6. Compensating coupling (1) according to claim 5, **characterised in that** the segments (21A, 21B, 21C, 21D, 22A, 22B, 22C, 22D) have axial flanges (31) extending radially from the sleeve portions (25, 26) and in lengthwise direction of the auxiliary coupling device (20), neighbouring segments (21A, 21B, 21C, 21D, 22A, 22B, 22C, 22D) contacting each other and being connected with each other at their axial flanges (31).

7. Compensating coupling (1) according to one of claims 1 to 6, **characterised in that** the first auxiliary coupling member (21) has an inner radial flange portion (28) at an inner axial end of its sleeve portion (25) and the projections (23) protrude axially from said inner radial flange portion (28).

8. Compensating coupling (1) according to one of claims 1 to 7, **characterised in that** the openings (24) are formed by holes (35) on an inner radial flange portion (29) at an inner axial end of the sleeve portion (26) of the second auxiliary coupling member (22).

9. Compensating coupling (1) according to one of claims 1 to 8, **characterised in that** the projections (23) are formed by cylindrical bolts (34) secured to the first auxiliary coupling member (21).

10. Compensating coupling (1) according to claim 9, **characterised in that** the bolts (34) are made of steel.

11. Compensating coupling (1) according to claim 9 or 10, **characterised in that** each bolt (34) has a rubber sleeve (38) for contacting the rim (37) of the corresponding hole (35) in the second position.

12. Compensating coupling (1) according to one of claims 8 to 11, **characterised in that** the rim (37) of each hole (35) is reinforced by a metal ring (39), respectively.

13. Compensating coupling (1) according to one of claims 1 to 6, **characterised in that** the projections (23) and openings (24) are formed by toothed edges (41, 42).

14. Compensating coupling (1) according to one of claims 1 to 13, **characterised in that** connection holes on the main coupling device (10) and on the auxiliary coupling device (20) for connecting same to one of the rotating elements (2, 3) of the drive train are aligned with each other.

15. Compensating coupling (1) according to one of claims 1 to 13, **characterised in that** the main coupling device (10) and the auxiliary coupling device (20) are secured separately from each other to the rotating elements (2, 3).

## Patentansprüche

1. Ausgleichskupplung (1) zur Verbindung mit zwei rotierenden Elementen (2, 3) eines Antriebsstrangs, umfassend:
eine Hauptkupplungsvorrichtung (10), die derart konfiguriert ist, dass sie mit jedem der Drehelemente (2, 3) verbindbar ist und mindestens eine Membran (11) zur Übertragung eines Drehmoments und zum Ausgleich einer axialen und/oder radialen und/oder winkelmäßigen Verschiebung zwischen den Drehelementen (2, 3) aufweist, und
eine Hilfskupplungsvorrichtung (20) mit einem ersten Hilfskupplungselement (21), das derart konfiguriert ist, dass es mit einem der beiden Drehelemente (2) verbindbar ist, und einem zweiten Hilfskupplungselement (22), das derart konfiguriert ist, dass es mit dem anderen der beiden Drehelemente (3) verbunden ist,
wobei das erste Hilfskupplungselement (21) Vorsprünge (23) aufweist, die sich axial in Öffnungen (24) erstrecken, die an dem zweiten Hilfskupplungselement (22) vorgesehen sind, so dass in einer ersten Position die Vorsprünge (23) und Öffnungen (24) außer Eingriff sind, wodurch die Drehmomentübertragung über die Hilfskupplungsvorrichtung (20) gesperrt wird, und in einer zweiten Position, die durch Drehung des ersten und des zweiten Hilfskupplungselements (21, 22) relativ zueinander erreicht werden kann, die Vorsprünge (23) und Öffnungen (24) in Umfangsrichtung in Eingriff sind, um die Drehmomentübertragung über die Hilfskupplungsvorrichtung (20) zu ermöglichen,
**dadurch gekennzeichnet, dass**
die mindestens eine Membran (11) aus faserverstärktem Kunststoff hergestellt ist,
das erste Hilfskupplungselement (21) und das zweite Hilfskupplungselement (22) jeweils um den äußeren radialen Umfang der Hauptkupplungsvorrichtung (10) angeordnet sind.

2. Ausgleichskupplung (1) nach Anspruch 1, **dadurch gekennzeichnet, dass** das erste und das zweite Hilfskupplungselement (21, 22) Hülsenabschnitte (25, 26) aufweisen, die zusammen die Hauptkupplungsvorrichtung (10) radial umschließen.

3. Ausgleichskupplung (1) nach Anspruch 1 oder 2, **dadurch gekennzeichnet, dass** eine feuerfeste faserverstärkte Schicht (50) auf den Außenumfang des ersten und zweiten Hilfselements (21, 22) laminiert ist.

4. Ausgleichskupplung (1) nach Anspruch 2 oder 3, **dadurch gekennzeichnet, dass** die Hülsenabschnitte (25, 26) aus faserverstärktem Kunststoff hergestellt sind.

5. Ausgleichskupplung (1) nach einem der Ansprüche 2 bis 4, wobei jedes der ersten und zweiten Hilfskupplungselemente (21, 22) zwei oder mehr Segmente (21A, 21B, 21C, 21D, 22A, 22B, 22C, 22D) umfasst, die die Hülsenabschnitte (25, 26) bilden, die in Umfangsrichtung der Hauptkupplungsvorrichtung (10) lösbar miteinander verbunden sind.

6. Ausgleichskupplung (1) nach Anspruch 5, **dadurch gekennzeichnet, dass** die Segmente (21A, 21B, 21C, 21D, 22A, 22B, 22C, 22D) axiale Flansche (31) aufweisen, die sich radial von den Hülsenabschnitten (25, 26) und in Längsrichtung der Hilfskupplungsvorrichtung (20) erstrecken, wobei benachbarte Segmente (21A, 21B, 21C, 21D, 22A, 22B, 22C, 22D) einander berühren und an ihren axialen Flanschen (31) miteinander verbunden sind.

7. Ausgleichskupplung (1) nach einem der Ansprüche 1 bis 6, **dadurch gekennzeichnet, dass** das erste Hilfskupplungselement (21) an einem inneren axialen Ende seines Hülsenabschnitts (25) einen inneren radialen Flanschabschnitt (28) aufweist und die Vorsprünge (23) von diesem inneren radialen Flanschabschnitt (28) axial vorstehen.

8. Ausgleichskupplung (1) nach einem der Ansprüche 1 bis 7, **dadurch gekennzeichnet, dass** die Öffnungen (24) durch Löcher (35) an einem inneren radialen Flanschabschnitt (29) an einem inneren axialen Ende des Hülsenabschnitts (26) des zweiten Hilfskupplungselements (22) gebildet sind.

9. Ausgleichskupplung (1) nach einem der Ansprüche 1 bis 8, **dadurch gekennzeichnet, dass** die Vorsprünge (23) durch zylindrische Bolzen (34) gebildet sind, die an dem ersten Hilfskupplungselement (21) befestigt sind.

10. Ausgleichskupplung (1) nach Anspruch 9, **dadurch gekennzeichnet, dass** die Bolzen (34) aus Stahl gefertigt sind.

11. Ausgleichskupplung (1) nach Anspruch 9 oder 10, **dadurch gekennzeichnet, dass** jeder Bolzen (34) eine Gummimanschette (38) aufweist, um in der zweiten Position den Rand (37) des entsprechenden Lochs (35) zu berühren.

12. Ausgleichskupplung (1) nach einem der Ansprüche 8 bis 11, **dadurch gekennzeichnet, dass** der Rand (37) jedes Lochs (35) jeweils durch einen Metallring (39) verstärkt ist.

13. Ausgleichskupplung (1) nach einem der Ansprüche 1 bis 6, **dadurch gekennzeichnet, dass** die Vorsprünge (23) und Öffnungen (24) durch gezahnte Kanten (41, 42) gebildet sind.

14. Ausgleichskupplung (1) nach einem der Ansprüche 1 bis 13, **dadurch gekennzeichnet, dass** Verbindungsöffnungen an der Hauptkupplungsvorrichtung (10) und an der Hilfskupplungsvorrichtung (20) zur Verbindung derselben mit einem der rotierenden Elemente (2, 3) des Antriebsstrangs miteinander fluchten.

15. Ausgleichskupplung (1) nach einem der Ansprüche 1 bis 13, **dadurch gekennzeichnet, dass** die Hauptkupplungseinrichtung (10) und die Hilfskupplungseinrichtung (20) getrennt voneinander an den rotierenden Elementen (2, 3) befestigt sind.

## Revendications

1. Accouplement compensateur (1) destiné à être connecté à deux éléments rotatifs (2, 3) d'une chaîne cinématique, comprenant:
un dispositif d'accouplement principal (10) configuré pour être connecté à chacun desdits éléments rotatifs (2, 3) et comprenant au moins une membrane (11) pour transmettre le couple et pour compenser le déplacement axial et/ou radial et/ou angulaire entre lesdits éléments rotatifs (2, 3), et
un dispositif d'accouplement auxiliaire (20) comportant un premier élément d'accouplement auxiliaire (21) configuré pour être connecté à l'un desdits deux éléments rotatifs (2) et un deuxième élément d'accouplement auxiliaire (22) configuré pour être couplé à l'autre desdits deux éléments rotatifs (3),
dans lequel le premier élément d'accouplement auxiliaire (21) présente des saillies (23) s'étendant axialement dans des ouvertures (24) prévues sur le deuxième élément d'accouplement auxiliaire (22) de telle sorte que dans une première position, les saillies (23) et les ouvertures (24) sont désengagées,
empêchant ainsi la transmission de couple via le dispositif d'accouplement auxiliaire (20), et dans une deuxième position, pouvant être obtenue par rotation des premier et deuxième éléments d'accouplement auxiliaires (21, 22) l'un par rapport à l'autre, les saillies (23) et les ouvertures (24) s'engagent dans une direction circonférentielle pour permettre la transmission de couple via le dispositif d'accouplement auxiliaire (20),
**caractérisé en ce que**
ladite au moins une membrane (11) est en matière plastique renforcée de fibres,
le premier élément d'accouplement auxiliaire (21) et le deuxième élément d'accouplement auxiliaire (22) sont respectivement disposés autour de la circonférence radiale externe du dispositif d'accouplement principal (10).

2. Accouplement compensateur (1) selon la revendication 1, **caractérisé en ce que** les premier et deuxième éléments d'accouplement auxiliaires (21, 22) comportent des portions de manchon (25, 26) encapsulant ensemble radialement le dispositif d'accouplement principal (10).

3. Accouplement compensateur (1) selon la revendication 1 ou 2, **caractérisé en ce qu'**une couche renforcée de fibres résistantes au feu (50) est laminée sur la circonférence externe des premier et deuxième éléments auxiliaires (21, 22).

4. Accouplement compensateur (1) selon la revendication 2 ou 3, **caractérisé en ce que** les portions de manchon (25, 26) sont en matière plastique renforcée de fibres.

5. Accouplement compensateur (1) selon l'une des revendications 2 à 4, dans lequel chacun des premier et deuxième éléments d'accouplement auxiliaires (21, 22) comprend deux ou plusieurs segments (21A, 21B, 21C, 21D, 22A, 22B, 22C, 22D), formant lesdites portions de manchon (25, 26), qui sont connectées de manière détachable les unes aux autres dans la direction circonférentielle du dispositif d'accouplement principal (10).

6. Accouplement compensateur (1) selon la revendication 5, **caractérisé en ce que** les segments (21A, 21B, 21C, 21D, 22A, 22B, 22C, 22D) présentent des brides axiales (31) s'étendant radialement à partir des portions de manchon (25, 26) et dans la direction de la longueur du dispositif d'accouplement auxiliaire (20), les segments voisins (21A, 21B, 21C, 21D, 22A, 22B, 22C, 22D) étant en contact les uns avec les autres et étant connectés les uns aux autres au niveau de leurs brides axiales (31).

7. Accouplement compensateur (1) selon l'une des revendications 1 à 6, **caractérisé en ce que** le premier élément d'accouplement auxiliaire (21) présente une portion de bride radiale interne (28) au niveau d'une extrémité axiale interne de sa portion de manchon (25) et les saillies (23) font saillie axialement depuis de ladite portion de bride radiale interne (28).

8. Accouplement compensateur (1) selon l'une des revendications 1 à 7, **caractérisé en ce que** les ouvertures (24) sont formées par des orifices (35) sur une portion de bride radiale interne (29) au niveau d'une extrémité axiale interne de la portion de manchon (26) du deuxième élément d'accouplement auxiliaire (22).

9. Accouplement compensateur (1) selon l'une des revendications 1 à 8, **caractérisé en ce que** les saillies (23) sont formées par des boulons cylindriques (34) fixés au premier élément d'accouplement auxiliaire (21).

10. Accouplement compensateur (1) selon la revendication 9, **caractérisé en ce que** les boulons (34) sont en acier.

11. Accouplement compensateur (1) selon la revendication 9 ou 10, **caractérisé en ce que** chaque boulon (34) comporte un manchon en caoutchouc (38) destiné à venir en contact avec le rebord (37) de l'orifice correspondant (35) dans la deuxième position.

12. Accouplement compensateur (1) selon l'une des revendications 8 à 11, **caractérisé en ce que** le rebord (37) de chaque orifice (35) est renforcé respectivement par un anneau métallique (39).

13. Accouplement compensateur (1) selon l'une des revendications 1 à 6, **caractérisé en ce que** les saillies (23) et les ouvertures (24) sont formées par des bords dentés (41, 42).

14. Accouplement compensateur (1) selon l'une des revendications 1 à 13, **caractérisé en ce que** les orifices de connexion sur le dispositif d'accouplement principal (10) et sur le dispositif d'accouplement auxiliaire (20) pour connecter celui-ci à l'un des éléments rotatifs (2, 3) de la chaîne cinématique sont alignés les uns avec les autres.

15. Accouplement compensateur (1) selon l'une des revendications 1 à 13, **caractérisé en ce que** le dispositif d'accouplement principal (10) et le dispositif d'accouplement auxiliaire (20) sont fixés séparément l'un de l'autre aux éléments rotatifs (2, 3).
